# DEMANDE DE BREVET EUROPEEN

(11) **EP 3 835 838 A1**
(43) Date de publication de la demande: **16.06.2021**
(21) Numéro de dépôt: 20210216.6
(22) Date de dépôt: 27.11.2020
(51) Int. Cl.: G02B 6/122, G02B 6/293, G02F 1/225, G02B 6/12, G02F 1/01, G02F 1/21

(54) **CIRCUIT PHOTONIQUE ATTÉNUATEUR À STRUCTURE INTERFÉROMÉTRIQUE VERTICALE**

(30) Priorité: 10.12.2019 FR 1914061
(71) Demandeur: Commissariat à l'énergie atomique et aux énergies alternatives, 75015 Paris (FR)
(72) Inventeur: FOWLER, Daivid, 38054 GRENOBLE CEDEX 09 (FR); MANG, Thomas, 38054 GRENOBLE CEDEX 09 (FR); MEYNARD, Basile, 38054 GRENOBLE CEDEX 09 (FR)
(74) Mandataire: Brevalex

(57) **Abrégé**

L'invention concerne un circuit photonique d'atténuation d'amplitude d'un signal optique, comprenant un interféromètre de Mach-Zehnder destiné à coupler un guide d'onde d'entrée (14) et un guide d'onde de sortie (15), ledit interféromètre comprenant une section de modulation (SM1) qui comporte un premier guide d'onde (11), un deuxième guide d'onde (12) et un déphaseur (13) configuré pour introduire une différence de phase entre un premier signal optique circulant sur le premier guide d'onde et un deuxième signal optique circulant sur le deuxième guide d'onde.

Le premier et le deuxième guide d'onde sont agencés dans deux couches parallèles distinctes et le déphaseur est un déphaseur thermo-optique agencé de manière à agir préférentiellement sur l'un des premier et deuxième guides d'onde.

## Description

### DOMAINE TECHNIQUE

Le domaine de l'invention est celui de l'optique intégrée et plus particulièrement celui de la photonique sur silicium. L'invention concerne plus spécifiquement un circuit photonique d'atténuation variable de l'amplitude d'un signal optique.

### TECHNIQUE ANTÉRIEURE

La photonique sur silicium est historiquement basée autour d'applications de télécommunication pour lesquelles une puce photonique comporte entre une et une dizaine d'entrées/sorties optiques, généralement des interfaces avec des fibres optiques.

Plus récemment, le champ d'application de la photonique sur silicium s'est élargi pour couvrir des applications portant sur la projection d'un champ optique en espace libre. Ces applications, telles que l'imagerie 3D ou la projection rétinienne, nécessitent un réseau d'un nombre important de points d'émission, typiquement entre 100 et 10000.

Puisque chaque point d'émission doit être alimenté par son propre guide d'onde, la densité de guides est généralement bien plus élevée que celle que l'on retrouve dans les circuits pour applications de télécommunication. De plus, il est souvent nécessaire de manipuler individuellement l'intensité et la phase de chacun de ces points d'émission.

Or les composants traditionnels pour modifier ces propriétés optiques présentent souvent une grande surface, incompatible avec un réseau très dense de guides où le pas des guides peut être seulement de plusieurs fois la largeur du guide lui-même. C'est le cas notamment des atténuateurs qui fonctionnent avec une commande électrique soit en modifiant l'absorption d'un guide d'onde (la partie imaginaire de son indice effectif), soit en modifiant la phase d'un guide d'onde (la partie réelle de son indice effectif) au sein d'une structure interférométrique.

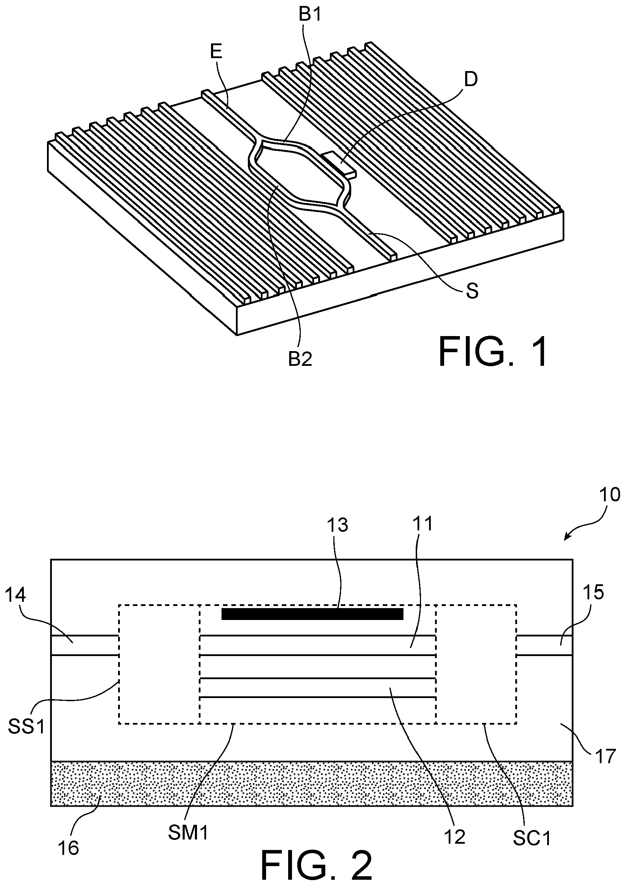

Les premiers, appelés modulateurs de type « électro-absorption » peuvent par exemple être réalisés en profitant de l'effet électro-optique en silicium ou de l'effet Franz-Keldysh dans les guides Si/Ge. On compte parmi les seconds les atténuateurs/modulateurs à base de structures interférométriques, notamment les modulateurs de type anneau résonnant ou les modulateurs de type interféromètre de Mach-Zehnder. La figure 1 illustre un exemple d'interféromètre de Mach-Zehnder intégré au sein d'un réseau dense de guides d'onde. Cet interféromètre couple un guide d'onde d'entrée E et un guide d'onde de sortie S. Il comprend une section de modulation qui comporte un premier guide d'onde B1 (formant le premier bras de l'interféromètre), un deuxième guide d'onde B2 (formant le deuxième premier bras de l'interféromètre) et un déphaseur D configuré pour introduire une différence de phase entre un premier signal optique circulant sur le premier guide d'onde et un deuxième signal optique circulant sur le deuxième guide d'onde

Comme cela ressort de la figure 1, de tels atténuateurs sont difficiles à intégrer dans un réseau dense de guides soit du fait de l'accès électrique latéral des guides, soit du fait de la largeur de la structure interférométrique qui est bien plus importante que celle d'un seul guide.

### EXPOSÉ DE L'INVENTION

L'invention vise à proposer un circuit photonique d'atténuation variable de l'amplitude d'un signal optique qui présente une empreinte de surface réduite et qui soit donc en particulier à même d'être plus facilement intégré dans un réseau de guides dense.

À cet effet, l'invention propose un circuit photonique d'atténuation variable de l'amplitude d'un signal optique, comprenant un interféromètre de Mach-Zehnder destiné à coupler un guide d'onde d'entrée et un guide d'onde de sortie. L'interféromètre comprend une section de modulation qui comporte un premier guide d'onde, un deuxième guide d'onde et un déphaseur configuré pour introduire une différence de phase entre un premier signal optique circulant sur le premier guide d'onde et un deuxième signal optique circulant sur le deuxième guide d'onde. Le premier et le deuxième guide d'onde sont agencés dans deux couches parallèles distinctes. Le déphaseur est un déphaseur thermo-optique agencé de manière à agir préférentiellement sur l'un des premier et deuxième guides d'onde en venant échauffer préférentiellement l'un des premier et deuxième guides d'onde.

Certains aspects préférés mais non limitatifs de ce circuit sont les suivants :
ledit interféromètre comprend en outre :
   - en amont de la section de modulation, une première section de transfert apte à séparer par couplage optique évanescent un signal optique d'entrée circulant sur le guide d'onde d'entrée entre le premier signal optique circulant sur le premier guide d'onde et le deuxième signal optique circulant sur le deuxième guide d'onde, et
   - en aval de la section de modulation, une deuxième section de transfert apte à combiner par couplage optique évanescent le premier signal optique circulant sur le premier guide d'onde et le deuxième signal optique circulant sur le deuxième guide d'onde en un signal optique de sortie circulant sur le guide d'onde de sortie ;
la première section de transfert comprend un premier guide d'onde de transition agencé dans un plan situé entre les plans dans lesquels sont agencés le premier et le deuxième guide d'onde et conformé de manière à récupérer le signal optique d'entrée et à transférer la moitié du signal d'entrée à chacun du premier et du deuxième guide ;
   la deuxième section de transfert comprend un deuxième guide d'onde de transition agencé dans un plan situé entre les plans dans lesquels sont agencés le premier et le deuxième guide d'onde et conformé de manière à combiner le premier signal optique et le deuxième signal optique pour former le signal optique de sortie et à transférer le signal optique de sortie sur l'un du premier et du deuxième guide ;
le premier et le deuxième guide d'onde présentent des portions de transition modale dans chacune des première et deuxième sections de transfert ;
le déphaseur thermo-optique agit préférentiellement sur le premier guide d'onde de la section de modulation et le guide d'onde d'entrée est directement couplé au premier guide d'onde ;
le guide d'onde de sortie est directement couplé au premier guide d'onde ;
le guide d'onde de sortie est directement couplé au deuxième guide d'onde ;
le déphaseur thermo-optique agit préférentiellement sur le premier guide d'onde de la section de modulation et le guide d'onde d'entrée est directement couplé au deuxième guide d'onde ;
le guide d'onde de sortie est directement couplé au deuxième guide d'onde ;
le guide d'onde de sortie est directement couplé au premier guide d'onde ;
le déphaseur thermo-optique agit préférentiellement sur le premier guide d'onde de la section de modulation et le premier guide d'onde présente une largeur supérieure à une largeur du deuxième guide d'onde et/ou une épaisseur différente de celle du deuxième guide d'onde et/ou est constitué d'un matériau différent du matériau du deuxième guide d'onde ;
il comprend en outre des tranchées d'isolation thermique qui s'étendent de part et d'autre de l'interféromètre dans une direction de propagation de la lumière.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
La figure 1 déjà discutée précédemment, illustre un atténuateur à interféromètre de Mach-Zehnder de l'état de l'art ;
La figure 2 est un schéma d'une coupe longitudinale d'un circuit selon un premier mode de réalisation possible de l'invention ;
La figure 3 est un schéma d'une coupe longitudinale d'un circuit selon un deuxième mode de réalisation possible de l'invention ;
La figure 4 est un schéma d'une coupe longitudinale d'un exemple de réalisation d'un circuit selon le premier mode de réalisation de l'invention ;
La figure 5 est un schéma d'une coupe transversale du circuit de la figure 4 ;
La figure 6 représente différentes vues des guides d'onde d'un circuit conforme au premier mode de réalisation possible de l'invention ;
La figure 7 illustre l'effet de la largeur des premier et deuxième guides sur la longueur nécessaire de ces guides pour introduire un déphasage de π ;
La figure 8 représente la transmission du circuit d'atténuation des figures 4-6 en fonction de la différence d'indice entre les matériaux constituant les premier et deuxième guides d'onde ;
La figure 9 est un résultat de simulation thermique du circuit d'atténuation des figures 4-6 ;
La figure 10 est un schéma d'une coupe longitudinale d'un circuit selon un troisième mode de réalisation possible de l'invention ;
La figure 11 représente différentes vues des guides d'onde d'un circuit conforme au troisième mode de réalisation possible de l'invention ;
La figure 12 représente la transmission du circuit d'atténuation de la figure 11 en fonction de la différence d'indice entre les matériaux constituant les premier et deuxième guides d'onde ;
La figure 13 est un schéma d'une coupe longitudinale d'un circuit selon un quatrième mode de réalisation possible de l'invention ;
La figure 14 représente différentes vues des guides d'onde d'un circuit conforme au quatrième mode de réalisation possible de l'invention ;
La figure 15 représente la transmission du circuit d'atténuation de la figure 14 en fonction de la différence d'indice entre les matériaux constituant les premier et deuxième guides d'onde.

### DESCRIPTION DES MODES DE RÉALISATION

L'invention porte sur un circuit photonique d'atténuation variable de l'amplitude d'un signal optique qui comprend un interféromètre de Mach-Zehnder destiné à coupler un guide d'onde d'entrée et un guide d'onde de sortie. L'interféromètre comprend une section de modulation qui comporte un premier guide d'onde formant un premier bras de l'interféromètre, un deuxième guide d'onde qui forme un deuxième bras de l'interféromètre et un déphaseur configuré pour introduire une différence de phase entre un premier signal optique circulant sur le premier guide d'onde et un deuxième signal optique circulant sur le deuxième guide d'onde. Le contrôle de la différence de phase permet de contrôler l'atténuation de l'intensité du signal optique circulant sur le guide d'entrée.

Pour réduire la largeur d'un tel circuit d'atténuation et permettre de conserver la densité de guides d'onde d'un composant optique, l'invention propose de remplacer l'interféromètre horizontal traditionnel par un interféromètre vertical prenant la forme d'une structure multicouche. Ainsi, dans le circuit selon l'invention le premier et le deuxième guide d'onde de la section de modulation sont agencés dans deux couches parallèles distinctes. Les premier et deuxième guides peuvent notamment être superposés l'un au-dessus de l'autre. Le premier et le deuxième guide peuvent être réalisés dans un même matériau ou dans des matériaux différents.

Par ailleurs, afin de contrôler la différence de phase et de là l'atténuation, le déphaseur du circuit selon l'invention est un déphaseur thermo-optique agencé de manière à agir préférentiellement sur l'un des premier et deuxième guides d'onde en venant échauffer préférentiellement l'un des premier et deuxième guides d'onde. Ce déphaseur est par exemple agencé dans une troisième couche parallèle et distincte des couches où sont agencés le premier et le deuxième guide d'onde.

Le premier guide d'onde et le deuxième guide d'onde sont préférentiellement superposés l'un au-dessus de l'autre de sorte que dans la section de modulation le premier signal optique et le deuxième signal optique se propagent parallèlement. L'invention n'est toutefois pas limitée à cette réalisation préférentielle et s'étend ainsi à des premier et deuxième guides d'onde ne présentant pas la même longueur, à des premier et deuxième guides d'onde ne présentant pas la même géométrie (ils peuvent ne pas présenter la même largeur et/ou la même épaisseur) ou encore à des premier et deuxième guide d'onde ne s'étendant pas selon des chemins optiques identiques (l'un pouvant être rectiligne tandis que l'autre est courbe par exemple).

Le circuit selon l'invention comprend en outre, en amont de la section de modulation, une première section de transfert apte à séparer par couplage optique évanescent un signal optique d'entrée circulant sur le guide d'onde d'entrée entre le premier signal optique circulant sur le premier guide d'onde et le deuxième signal optique circulant sur le deuxième guide d'onde.

Et le circuit selon l'invention comprend également, en aval de la section de modulation, une deuxième section de transfert apte à combiner par couplage optique évanescent le premier signal optique circulant sur le premier guide d'onde et le deuxième signal optique circulant sur le deuxième guide d'onde en un signal optique de sortie circulant sur le guide d'onde de sortie.

Le couplage évanescent permet ainsi de transférer une partie de l'énergie du signal d'entrée vers l'un ou les guides d'onde de la section de modulation agencés sur une/des couches inférieures/supérieures. Les mêmes effets de couplage évanescent sont utilisés pour faire remonter/redescendre l'énergie depuis l'un ou les guides d'onde de la section de modulation vers le guide de sortie et induire une interférence constructive/destructive en fonction du déphasage relatif subi par le champ optique lors de son passage dans celui des premier et deuxième guides d'onde sur lequel le déphaseur thermo-optique agit préférentiellement.

Dans un premier exemple de réalisation, le premier et le deuxième guide d'onde présentent des portions de transition modale (*taper*) dans chacune des première et deuxième sections de transfert. Ces portions de transition modale assurent, dans la première section de transfert, le transfert d'une partie, typiquement la moitié, de l'énergie du signal circulant sur l'un des guides vers l'autre guide et, dans la seconde section de transfert, le transfert de l'énergie, typiquement la totalité, du signal circulant sur l'un des guides vers l'autre guide.

Ces portions de transition modale peuvent notamment être conçues par simulation des sections de transfert dans leur ensemble. Plus particulièrement, la puissance en sortie d'une section de transfert est simulée en fonction des largeurs et longueurs des portions de transition modales. Ces simulations peuvent notamment être utilisées pour venir compenser d'éventuelles pertes optiques induites par la proximité du déphaseur thermo-optique d'un des guides de la section de modulation, en conduisant par exemple à une première section de transfert présentant une division de puissance légèrement différente de 50%.

Dans un second exemple de réalisation, la première section de transfert comprend un premier guide d'onde de transition agencé dans un plan situé entre les plans dans lesquels sont agencés le premier et le deuxième guide d'onde, typiquement le plan médian entre les plans du premier et deuxième guide d'onde. Ce premier guide d'onde de transition est conformé de manière à récupérer le signal optique d'entrée et à transférer la moitié du signal d'entrée à chacun du premier et du deuxième guide. La deuxième section de transfert comprend quant à elle un deuxième guide d'onde de transition agencé dans un plan situé entre les plans dans lesquels sont agencés le premier et le deuxième guide d'onde, typiquement le plan médian entre les plans du premier et deuxième guide d'onde. Ce second guide d'onde de transition est conformé de manière à combiner le premier signal optique et le deuxième signal optique pour former le signal optique de sortie.

On a représenté de manière schématique sur les figures 2, 3, 10 et 13 différents exemples de réalisation possible d'un circuit 10, 20, 30, 40 selon l'invention dans lequel le déphaseur thermo-optique agit préférentiellement sur le premier guide d'onde de la section de modulation. Chacune de ces figures est une vue en coupe d'un circuit selon l'invention prise le long d'une direction de propagation de la lumière dite direction longitudinale.

Le circuit 10, 20, 30, 40 comprend comme indiqué précédemment une section de modulation SM1, SM2, SM3, SM4 qui comporte un premier guide d'onde 11, 21, 31, 41, un deuxième guide d'onde 12, 22, 32, 42 et un déphaseur 13, 23, 33, 43 configuré pour introduire une différence de phase entre un premier signal optique circulant sur le premier guide d'onde et un deuxième signal optique circulant sur le deuxième guide d'onde. Dans les exemples ici représentés, le premier guide d'onde 11, 21, 31, 41 est agencé dans une couche supérieure du circuit et le deuxième guide d'onde 12, 22, 32, 42 est agencée dans une couche inférieure du circuit. Le déphaseur 13, 23, 33, 43 est par ailleurs agencé au-dessus du premier guide d'onde, de manière à agir de manière préférentielle sur le premier guide d'onde.

Le circuit 10, 20, 30, 40 comporte par ailleurs la première section de transfert SS1, SS2, SS3, SS4 en amont de la section de modulation pour séparer par couplage optique évanescent un signal optique d'entrée circulant sur le guide d'onde d'entrée 14, 24, 34, 44 entre un premier signal optique circulant sur le premier guide d'onde 11, 21, 31, 41 et un deuxième signal optique circulant sur le deuxième guide d'onde 12, 22, 32, 42. Et le circuit comporte également la deuxième section de transfert SC1, SC2, SC3, SC4 en aval de la section de modulation pour combiner par couplage optique évanescent le premier signal optique circulant sur le premier guide d'onde 11, 21, 31, 41 et le deuxième signal optique circulant sur le deuxième guide d'onde 12, 22, 32, 42 en un signal optique de sortie circulant sur le guide d'onde de sortie 15, 25, 35, 45.

Les différents guides du circuit 10, 20, 30, 40 sont entourés d'un matériau d'encapsulation 17, 27, 37, 47 porté par un substrat 16, 26, 36, 46.

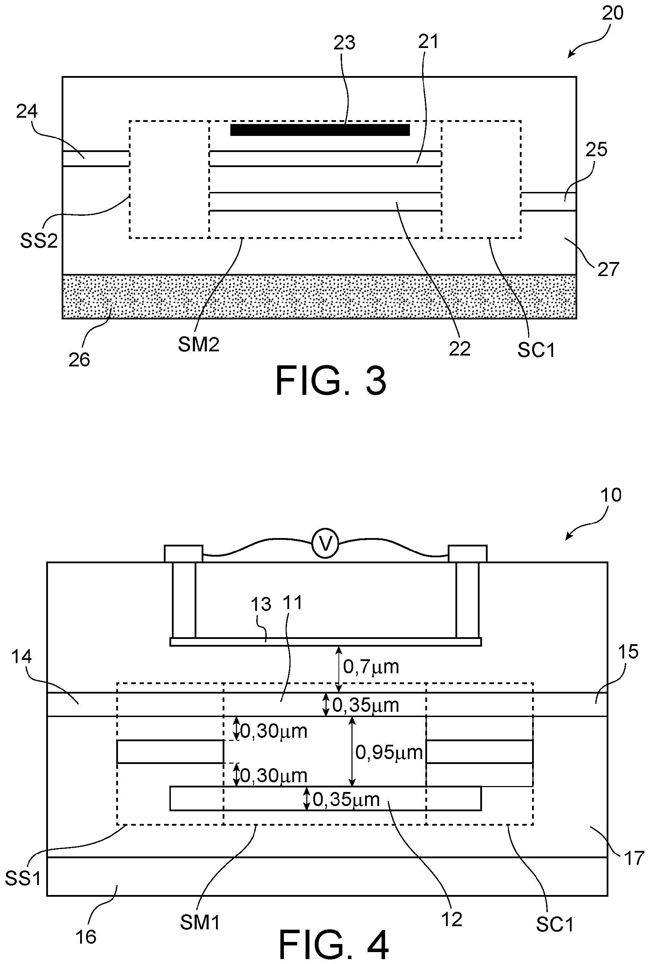

Dans les exemples de réalisation des figures 2 et 3, le guide d'onde d'entrée 14, 24 est agencé au même niveau que le premier guide d'onde 11, 21 et directement couplé à celui-ci. La première section de transfert SS1, SS2 y est configurée pour transférer une partie de l'énergie du signal d'entrée circulant sur le guide d'onde d'entrée, de préférence la moitié de cette énergie, vers le deuxième guide d'onde 12, 32 agencé dans une couche inférieure.

Sur la figure 2, le guide d'onde de sortie 15 est agencé au même niveau que le premier guide d'onde 11 et directement couplé à celui-ci. La deuxième section de transfert SC1 y est configurée pour faire remonter de l'énergie depuis le deuxième guide d'onde 12 agencé dans une couche inférieure, de préférence la totalité de l'énergie du deuxième signal optique.

Sur la figure 3, le guide d'onde de sortie 15 est agencé au même niveau que le deuxième guide d'onde 22 et directement couplé à celui-ci. La deuxième section de transfert SC2 y est configurée pour faire descendre de l'énergie depuis le premier guide d'onde 21 agencé dans une couche supérieure, de préférence la totalité de l'énergie du premier signal optique.

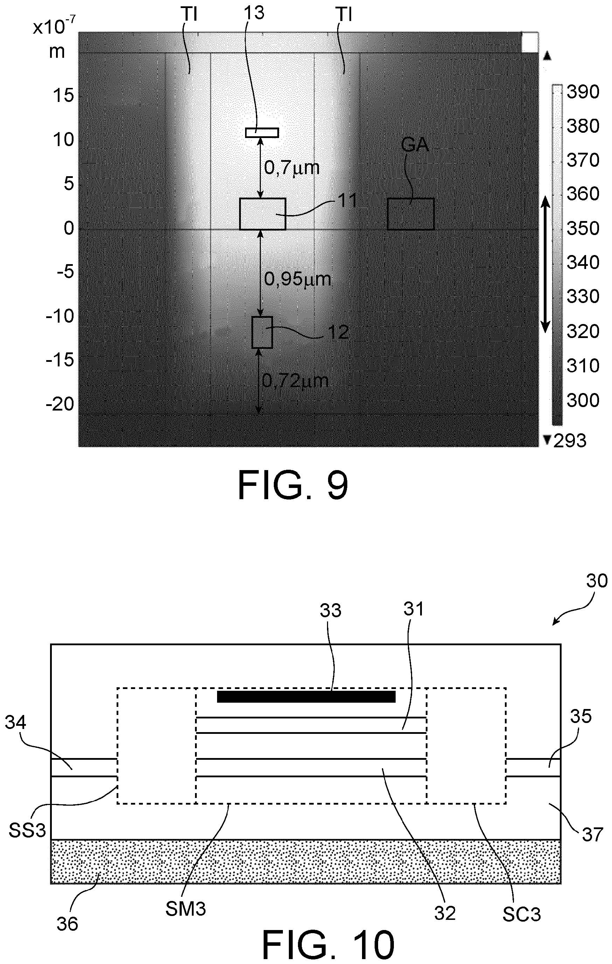

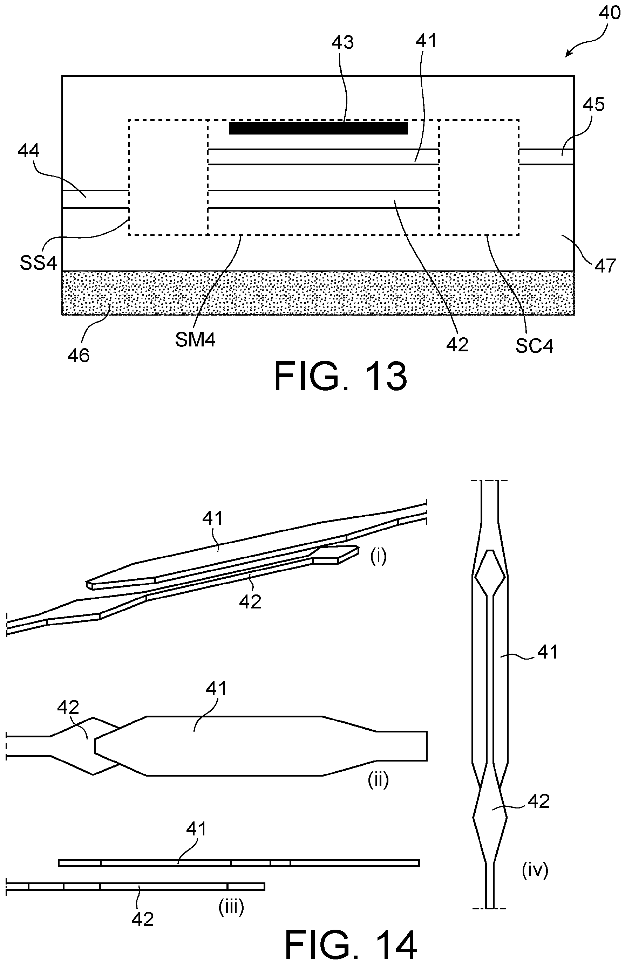

Dans les exemples de réalisation des figures 10 et 13, le guide d'onde d'entrée 34, 44 est agencé au même niveau que le deuxième guide d'onde 32, 42 et directement couplé à celui-ci. La première section de transfert SS3, SS4 y est configurée pour transférer une partie de l'énergie du guide d'onde d'entrée, de préférence la moitié de cette énergie, vers le premier guide d'onde 31, 41 agencé dans une couche inférieure.

Sur la figure 10, le guide d'onde de sortie 35 est agencé au même niveau que le deuxième guide d'onde 31 et directement couplé à celui-ci. La deuxième section de transfert SC3 y est configurée pour faire descendre de l'énergie depuis le premier guide d'onde 31 agencé dans une couche supérieure, de préférence la totalité de l'énergie du premier signal optique.

Sur la figure 13, le guide d'onde de sortie 45 est agencé au même niveau que le premier guide d'onde 41 et directement couplé à celui-ci. La deuxième section de transfert SC4 y est configurée pour faire remonter de l'énergie depuis le deuxième guide d'onde 42 agencé dans une couche inférieure, de préférence la totalité de l'énergie du deuxième signal optique.

On a représenté sur les figures 4, 5 et 6 un exemple de réalisation d'un circuit selon le premier mode de réalisation de l'invention (i.e. selon le schéma de la figure 2) à sections de transfert exploitant des guides de transition. Dans cet exemple, l'interféromètre comprend trois couches optiques parallèles et distinctes faites en SiN (dont l'indice effectif est d'environ 2 à une longueur d'onde de 905nm) et entourées de SiO2, à savoir une couche supérieure, une couche inférieure et une couche intermédiaire entre la couche supérieure et la couche inférieure. La couche supérieure est par exemple espacée de 0,3µm de la couche intermédiaire, la couche intermédiaire est par exemple espacée de 0,3µm de la couche inférieure et la couche inférieure est par exemple espacée de 0,72µm du substrat 16.

La lumière rentre par un guide d'entrée 14 fait à partir de la couche supérieure, qui présente dans un plan transverse à la direction de propagation de la lumière une hauteur de 350nm et une largeur 400nm. Dans la première section de transfert SS1, un premier guide de transition 18 est placé dans la couche intermédiaire. La largeur de ce guide de transition 18 est augmentée de façon graduelle, par exemple de 50nm à 500nm sur une distance de 100µm, afin d'assurer le transfert de la totalité du champ optique de la lumière du guide d'entrée. Une diminution de la largeur du guide de transition 18, par exemple de 500nm à 50nm sur une distance de 100µm, retransfert ensuite 50% de la lumière vers le premier guide 11 dans la couche supérieure et 50% vers le deuxième guide 12 dans la couche.

Suite à la séparation 50/50 du signal d'entrée entre le premier signal optique sur le premier guide et le deuxième signal optique sur le deuxième guide, le premier signal optique et le deuxième signal optique se propagent parallèlement dans la section de modulation SM1 sur 500 µm.

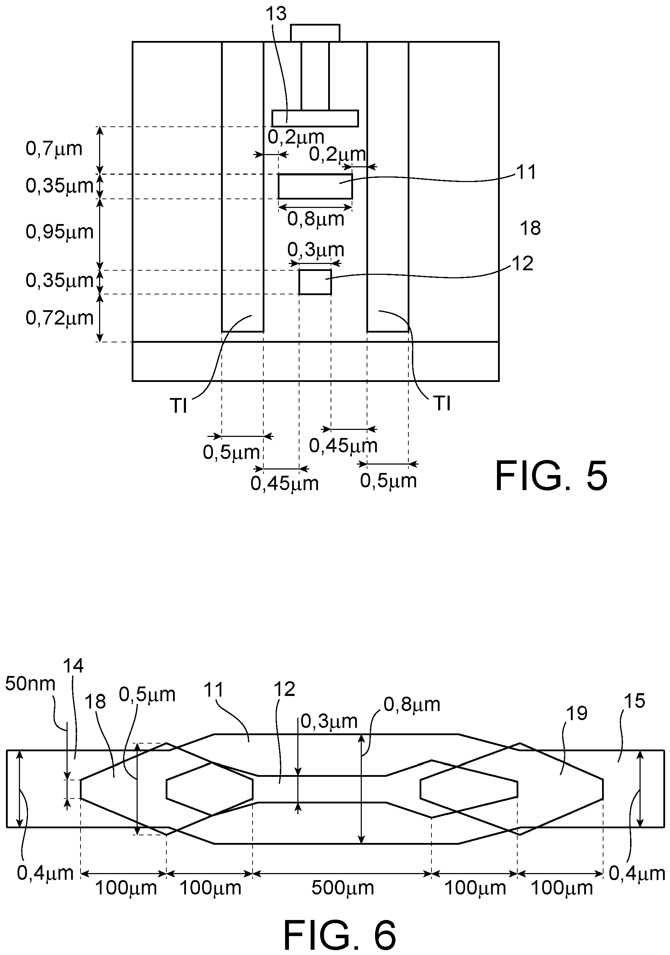

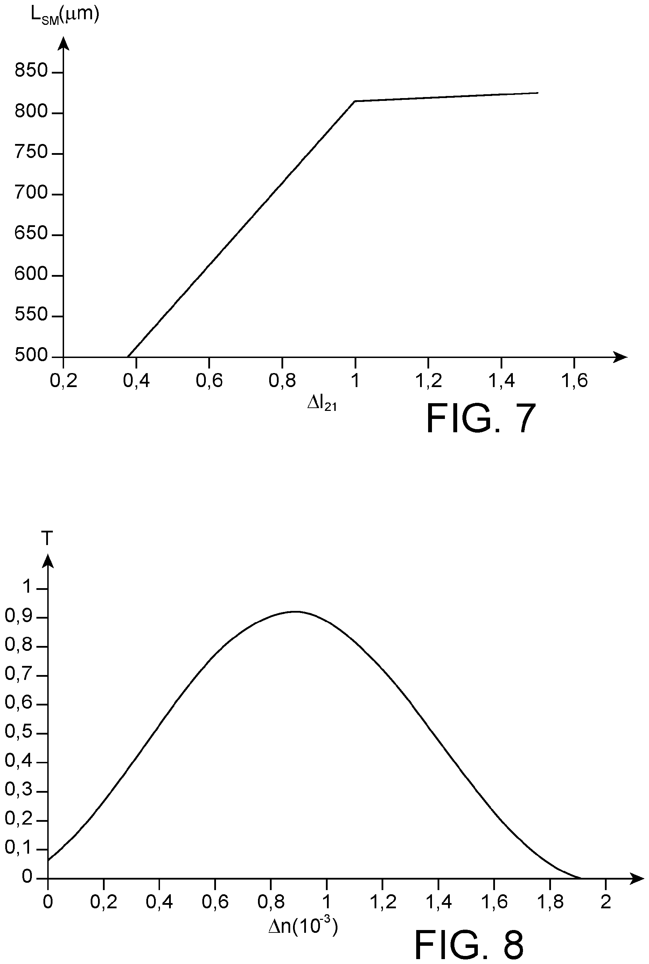

Comme représenté sur la vue en coupe de la figure 5, dans cette section de modulation les premiers et deuxièmes guides 11, 12 peuvent présenter une largeur différente, avec par exemple une largeur de 800nm pour le premier guide 11 et une largeur de 300nm pour le deuxième guide 12. Il en découle une différence de confinement du champ optique au sein de chaque guide qui peut être exploitée pour réduire la longueur nécessaire pour effectuer un déphasage relatif de π entre les bras de l'interféromètre, pour une température de chauffage donnée. La figure 7 montre à ce propos des résultats d'une simulation de la longueur nécessaire L_{SM} de la section de modulation pour atteindre un tel déphasage en fonction du rapport Δl₂₁ entre la largeur du deuxième guide et la largeur du premier guide, pour un écart de température entre les deux guides de 40°C. Avec des guides présentant une même largeur, la section de modulation doit présenter une longueur de 825µm. En adoptant une largeur de 800nm pour le premier guide 11 et une largeur de 300nm pour le deuxième guide 12, la longueur de la section de modulation peut être réduite à 500µm.

En aval de la section de modulation SM1, dans la deuxième section de transfert SC1, la lumière du deuxième guide 12 est ensuite transférée vers le guide de sortie agencé dans la couche supérieure via un deuxième guide de transition 19 agencé dans la couche intermédiaire. En fonction de la relation de phase entre la lumière sortant des premier et deuxième guides 11, 12, un effet d'interférence induit une atténuation d'intensité en sortie par rapport à l'intensité en entrée du circuit.

La figure 8 illustre un taux de transmission T de l'intensité de la lumière (à λ = 905 nm) réalisée par le circuit de la figure 6 en fonction d'une différence d'indice Δn du matériau des cœurs des premier et deuxième guides 11, 12. On constate qu'une variation de la différence d'indice d'environ 9,2x10⁻⁴ suffit à faire varier la transmission d'environ 10% à une transmission d'environ 90%. Dans le cadre de l'invention, cette différence relative d'indice est contrôlée de manière active en adoptant un déphaseur thermo-optique agencé de manière à échauffer l'un des premiers et deuxièmes guides d'onde préférentiellement à l'autre des premiers et deuxièmes guides d'onde. Dans l'exemple de réalisation ici décrit, ce déphaseur prend la forme d'une chaufferette 13 placée au-dessus du premier guide 11, en étant par exemple espacée de celui-ci de 0,7µm. Lorsqu'une tension V est appliquée à cette chaufferette 13, un gradient thermique est généré et comme le premier guide 11 est plus proche de la chaufferette que le deuxième guide 12, le premier guide 11 subit une augmentation de température supérieure à celle subie par le deuxième guide. Dans cet exemple, la couche intermédiaire permet entre-autres d'augmenter l'écart de température entre les premier et deuxième guides en les éloignant davantage l'un de l'autre.

Par effet thermo-optique, l'indice effectif du mode optique dans le premier guide en SiN, de largeur 800nm, d'épaisseur 350 nm et entouré de silice est de 2,3.10⁻⁵K⁻¹. En effet, l'indice thermo-optique du SiN est de 3,5.10⁻⁵K⁻¹ à 905 nm. Or l'indice thermo-optique effectif du mode TE0 dans le guide SiN d'épaisseur 350 nm et de largeur 800 nm est de 2,3.10⁻⁵K⁻¹ car seulement 61 % du mode TE0 est confiné dans le SiN entouré de silice. Dès lors, une différence de température entre les premier et deuxième guides qui permet de créer une différence d'indice de 9,2x10⁻⁴ et donc d'engendrer un passage entre une atténuation minimale et une atténuation maximale de l'intensité de la lumière est de 40 degrés.

La figure 9 présente une simulation thermique du circuit de la figure 6. Cette simulation montre qu'en respectant une température maximale de la chaufferette en dessous de 100°C pour éviter une dégradation du circuit tout en autorisant une séparation suffisante entre le guide supérieur et la chaufferette pour ne pas subir de pertes optiques, une différence de température (exprimée en Kelvin sur la figure) entre les premier et deuxième guides de 40°C est largement atteignable.

Comme représenté sur les figures 5 et 9, le circuit peut en outre comprendre des tranchées d'isolation thermique TI qui s'étendent de part et d'autre de l'interféromètre dans une direction de propagation de la lumière. Les tranchées d'isolation thermique sont remplies d'une matière à faible conduction thermique, par exemple de l'air. La figure 9 montre qu'une tranchée TI d'air de 500 nm de large séparant le circuit selon l'invention d'un guide adjacent GA suffit pour isoler de manière efficace le circuit des autres composants. Grace à ces tranchées latérales, le circuit selon l'invention peut ainsi être encore plus facilement intégré dans un réseau dense de guides et plusieurs circuits selon l'invention peuvent fonctionner de manière indépendante tout en étant agencés de manière adjacente dans un tel réseau dense.

Dans l'exemple ici représenté, les tranchées sont profondes et viennent isoler à la fois la chaufferette 13, le premier guide 11 et le deuxième guide 12. Le deuxième guide 12 étant plus éloigné des guides voisins que le premier guide 11, son isolation est moins critique. On peut ainsi avantageusement prévoir des tranchées moins profondes, et donc plus facilement réalisables, qui isolent de manière plus importante le premier guide 11 comparativement au deuxième guide 12 afin d'accroitre la différence de température entre les deux guides.

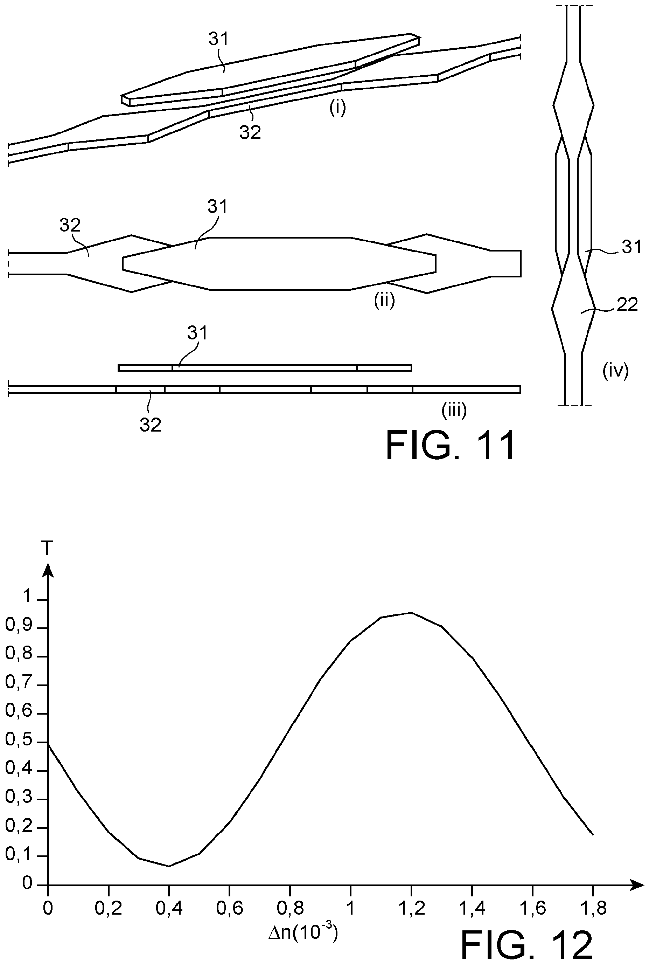

On a représenté sur la figure 11 différentes vues des premier et deuxième guides d'onde 31, 32 d'un circuit conforme au troisième mode de réalisation possible de l'invention (i.e. selon le schéma de la figure 10) à sections de transfert n'exploitant pas de guides de transition mais uniquement des portions de transition modale (*taper*) dans chacun des premier et deuxième guides. On retrouve ainsi (i) une vue en perspective, (ii) une vue de dessus, (iii) une vue de côté et (iv) une vue de dessous. Dans ce mode de réalisation, la différence de largeur des premier et deuxième guides ne sert pas seulement à modifier la sensibilité de chaque guide à la température mais aussi à écarter l'indice effectif de chaque guide pour éviter un couplage évanescent entre les guides dans la section de modulation. Un effet similaire peut être obtenu en prévoyant des guides qui présentent des épaisseurs différentes et/ou qui sont constitués de matériaux différents, en complément ou non de largeurs différentes.

La figure 12 représente le taux de transmission T du circuit d'atténuation de la figure 11 en fonction de la différence d'indice Δn entre les matériaux constituant les premier et deuxième guides d'onde, avec une longueur de section de modulation allongée à 1,3mm. On constate qu'une différence d'indice d'environ 8x10⁻⁴ suffit à faire varier la transmission d'environ 10% à une transmission de plus de 90%.

On a représenté sur la figure 14 différentes vues des premier et deuxième guides d'onde 41, 42 d'un circuit conforme au quatrième mode de réalisation possible de l'invention (i.e. selon le schéma de la figure 13 avec entrée et sortie sur deux niveaux différents) à sections de transfert n'exploitant pas de guides de transition mais uniquement des portions de transition modale (*taper*) dans chacun des premier et le deuxième guides. On retrouve ainsi (i) une vue en perspective, (ii) une vue de dessus, (iii) une vue de côté et (iv) une vue de dessous. Dans ce mode de réalisation, la différence de largeur des premier et deuxième guides sert à modifier la sensibilité de chaque guide à la température ainsi qu'à éviter un couplage évanescent entre les guides dans la section de modulation. Ici aussi, un effet similaire peut être obtenu au moyen d'une différenciation des caractéristiques des guides, i.e. des largeurs différentes et/ou des épaisseurs différentes et/ou des matériaux différents.

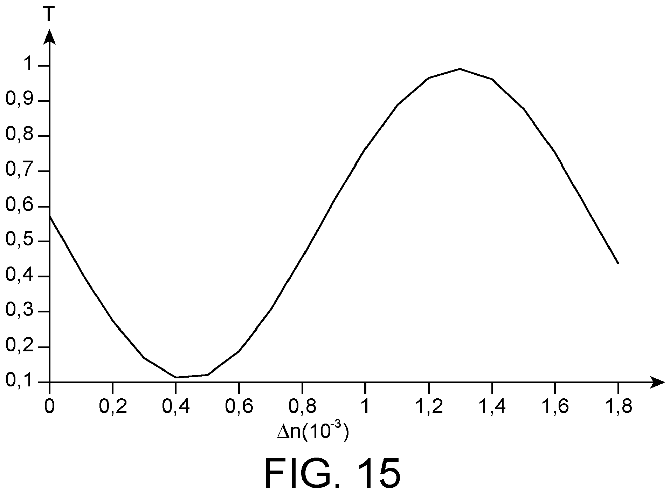

La figure 15 représente le taux de transmission T du circuit d'atténuation de la figure 14 en fonction de la différence d'indice Δn entre les matériaux constituant les premier et deuxième guides d'onde, avec une longueur de section de modulation allongée à 1,3mm. On constate des performances similaires au circuit des figures 11 et 12.

## Revendications

1. Circuit photonique d'atténuation variable de l'amplitude d'un signal optique (10, 20, 30, 40), comprenant un interféromètre de Mach-Zehnder destiné à coupler un guide d'onde d'entrée (14, 24, 34, 44) et un guide d'onde de sortie (15, 25, 35, 45), ledit interféromètre comprenant une section de modulation (SM1, SM2, SM3, SM4) qui comporte un premier guide d'onde (11, 21, 31, 41), un deuxième guide d'onde (12, 22, 32, 42) et un déphaseur (13, 23, 33, 43) configuré pour introduire une différence de phase entre un premier signal optique circulant sur le premier guide d'onde et un deuxième signal optique circulant sur le deuxième guide d'onde, **caractérisé en ce que** le premier et le deuxième guide d'onde sont agencés dans deux couches parallèles distinctes et **en ce que** le déphaseur est un déphaseur thermo-optique agencé de manière à agir préférentiellement sur l'un des premier et deuxième guides d'onde.

2. Circuit selon la revendication 1, dans lequel ledit interféromètre comprend en outre :
- en amont de la section de modulation, une première section de transfert (SS1, SS2, SS3, SS4) apte à séparer par couplage optique évanescent un signal optique d'entrée circulant sur le guide d'onde d'entrée entre le premier signal optique circulant sur le premier guide d'onde et le deuxième signal optique circulant sur le deuxième guide d'onde, et
- en aval de la section de modulation, une deuxième section de transfert (SC1, SC2, SC3, SC4) apte à combiner par couplage optique évanescent le premier signal optique circulant sur le premier guide d'onde et le deuxième signal optique circulant sur le deuxième guide d'onde en un signal optique de sortie circulant sur le guide d'onde de sortie.

3. Circuit selon la revendication 2, dans lequel la première section de transfert (SS1) comprend un premier guide d'onde de transition (18) agencé dans un plan situé entre les plans dans lesquels sont agencés le premier et le deuxième guide d'onde et conformé de manière à récupérer le signal optique d'entrée et à transférer la moitié du signal d'entrée à chacun du premier et du deuxième guide.

4. Circuit selon l'une des revendications 2 et 3, dans lequel la deuxième section de transfert (SC1) comprend un deuxième guide d'onde de transition (19) agencé dans un plan situé entre les plans dans lesquels sont agencés le premier et le deuxième guide d'onde et conformé de manière à combiner le premier signal optique et le deuxième signal optique pour former le signal optique de sortie et à transférer le signal optique de sortie sur l'un du premier et du deuxième guide.

5. Circuit selon la revendication 2, dans lequel le premier et le deuxième guide d'onde présentent des portions de transition modale dans chacune des première et deuxième sections de transfert.

6. Circuit selon l'une des revendications 1 à 5, dans lequel le déphaseur thermo-optique (13, 23) agit préférentiellement sur le premier guide d'onde (11, 21) de la section de modulation (SM1, SM2) et dans lequel le guide d'onde d'entrée (14, 24) est directement couplé au premier guide d'onde (11, 21).

7. Circuit selon la revendication 6, dans lequel le guide d'onde de sortie (15) est directement couplé au premier guide d'onde (11).

8. Circuit selon la revendication 6, dans lequel le guide d'onde de sortie (25) est directement couplé au deuxième guide d'onde (12).

9. Circuit selon l'une des revendications 1 à 5, dans lequel le déphaseur thermo-optique (33, 43) agit préférentiellement sur le premier guide d'onde (31, 41) de la section de modulation (SM3, SM4) et dans lequel le guide d'onde d'entrée (34, 44) est directement couplé au deuxième guide d'onde (32, 42).

10. Circuit selon la revendication 9, dans lequel le guide d'onde de sortie (35) est directement couplé au deuxième guide d'onde (32).

11. Circuit selon la revendication 9, dans lequel le guide d'onde de sortie (45) est directement couplé au premier guide d'onde (41).

12. Circuit selon l'une des revendications 1 à 11, dans lequel le déphaseur thermo-optique agit préférentiellement sur le premier guide d'onde de la section de modulation et dans lequel le premier guide d'onde présente une largeur supérieure à une largeur du deuxième guide d'onde.

13. Circuit selon l'une des revendications 1 à 12, comprenant en outre des tranchées d'isolation thermique (TI) qui s'étendent de part et d'autre de l'interféromètre dans une direction de propagation de la lumière.
